Europäisches Patentamt

European Patent Office

Office européen des brevets

(19)

(11) Veröffentlichungsnummer: **0 160 819**
**B1**

# EUROPÄISCHE PATENTSCHRIFT

(45) Veröffentlichungstag der Patentschrift:
**14.09.88**

(21) Anmeldenummer: **85103516.2**

(22) Anmeldetag: **25.03.85**

(51) Int. Cl.⁴: **H 04 B 3/36**

(54) Schaltungsanordnung zum Überspannungsgrobschutz für einen Zwischenverstärker oder Zwischenregenerator.

(30) Priorität: **30.04.84 DE 3411942**

(43) Veröffentlichungstag der Anmeldung:
**13.11.85 Patentblatt 85/46**

(45) Bekanntmachung des Hinweises auf die Patenterteilung:
**14.09.88 Patentblatt 88/37**

(84) Benannte Vertragsstaaten:
**AT BE CH DE FR GB IT LI NL SE**

(56) Entgegenhaltungen:
**EP - A - 0 042 014**
**US - A - 3 530 393**

**ELECTRICAL COMMUNICATION, Band 53, Nr. 2, 1978, Seiten 108-111, New York, US; B.B. FOSTER u.a.: "NG-1 submerged repeater"**

(73) Patentinhaber: **Siemens Aktiengesellschaft Berlin und München, Wittelsbacherplatz 2, D-8000 München 2 (DE)**

(72) Erfinder: **Wendt, Peter, Dipl.-Ing., Oblatterwallstrasse 36 c, D-8900 Augsburg (DE)**

## Beschreibung

Die Erfindung bezieht sich auf eine Schaltungsanordnung zum Überspannungsgrobschutz für einen Zwischenverstärker oder Zwischenregenerator einer Nachrichten-Übertragungseinrichtung mit Koaxialkabelstrecke, der am Eingang und am Ausgang mit je einer Stromversorgungsweiche und am Eingang und/oder am Ausgang mit einer einen Überspannungsableiter enthaltenden Vorrichtung zum Überspannungsgrobschutz bei Überspannungsbeeinflussung auf der Kabelstrecke versehen ist, wobei die Stromversorgungsweichen, die zur Fernspeisung über eine über den Innenleiter des Koaxialkabels geführten Fernspeisestrompfad vorgesehen sind, jeweils eine Drosselanordnung enthalten und wobei der Fernspeisestrompfad über die Drosselanordnungen der Stromversorgungsweichen und den dazwischen gelegenen Speiseeingang des Zwischenverstärkers oder Zwischenregenerators verläuft, und wobei der Aussenleiter des ankommenden Kabels und der Aussenleiter des abgehenden Kabels über eine Kabelaussenleiterverbindung miteinander verbunden sind.

Eine derartige Schaltungsanordnung ist bereits aus der DE-AS 2 843 919 bekannt.

Bei der bekannten Schaltungsanordnung sind der Innenleiter und der Aussenleiter des ankommenden Koaxialkabels unmittelbar am Eingang des Zwischenverstärkers über einen Überspannungsableiter verbunden, um den Zwischenverstärker vor Überschlägen zu schützen. Beim Ansprechen des Überspannungsableiters entsteht ein steiler Spannungssprung, der – durch den Vorentzerrer gedämpft – auf den Verstärkereingang wirkt. Bei Regeneratoren, die sehr breitbandige Sigale übertragen, steht jedoch eine derartige Dämpfung nicht zur Verfügung. In diesem Fall ist dann eine entsprechende Ausgestaltung des Überspannungsfeinschutzes und des aktiven Regeneratorteils erforderlich.

Bei der bekannten Schaltungsanordnung verbindet ein Kondensator den einen Anschluss des Speiseeinganges mit der Kabelaussenleiterverbindung. Dieser Kondensator muss für hohe Frequenzen eine niedrige Impedanz haben, um eine hochfrequente Rückkopplung vom Ausgang des Zwischenverstärkers auf den Eingang zu vermeiden. Damit ist der Überspannungsableiter hochfrequenzmässig, d.h. für die in der steilen Schaltflanke des Überspannungsableiters enthaltenen Frequenzen, der im Fernspeisestrompfad gelegenen Drossel parallel geschaltet, so dass ein vom Überspannungsableiter erzeugter hochfrequenter Störimpuls über den am Verstärkereingang liegenden Hochpass in den am Eingang vorgesehenen Entzerrer eingekoppelt wird.

Aus W. Peters: «Stromversorgungsweichen für ferngespeiste Trägerfrequenzzwischenverstärker», Frequenz 28 (1974), Seiten 326 bis 333, insbesondere Seite 327, Bild 2c1, sind bereits Stromversorgungsweichen bekannt, die einen Tiefpass zur Erhöhung der Umlaufdämpfung enthalten. Unter Umlaufdämpfung ist in diesem Zusammenhang die Dämpfung zwischen dem ausgangsseitigen Klemmenpaar und dem eingangsseitigen Klemmenpaar des Verstärkers zu verstehen. Aus Seite 328, Bild 4 geht ein sogenanntes Potentialtrennfilter mit Leitungsdrosseln hervor. Bei Leitungsdrosseln setzen die beiden Wicklungen dem gegensinnig fliessenden Signalstrom einen sehr geringen Widerstand entgegen. Dem jeweils nur durch eine Wicklung fliessenden Strom wird ein sehr hoher Widerstand entgegengesetzt. Die Bilder 15e und 15f auf Seite 332 zeigen koaxial aufgebaute Potentialtrennfilter.

Aus der DE-OS 3 122 08 ist bereits eine Frequenzweiche bekannt, bei der der Aussenleiter einer homogenen Leitung mit dem Innenleiter einer inhomogenen Leitung verbunden ist. Der einem Anschlusskabel benachbarte Anschluss des Aussenleiters der inhomogenen Leitung ist mit einer Abschirmung, der andere Anschluss mit dem Bezugspotential des aktiven Regeneratorteiles verbunden.

Eine weitere Überspannungsschutzschaltung für einen ferngespeisten Verstärker, wobei ein Tiefpass zwischen den Leitungsenden und dem Überspannungsableiter vorgesehen ist, ist aus der EP-A 0 042 014 bekannt.

Die Überspannungen, die bei Überspannungsbeeinflussung auf Koaxialkabelstrecken auftreten, haben im allgemeinen vergleichsweise grosse Anstiegszeiten im Mikrosekundenbereich und Impulsdauern in der Grössenordnung von einer Millisekunde. Die Anstiegszeit und die Impulsdauer von Digitalsignalen hoher Bitfolgefrequenz liegt im Nanosekunden-Bereich. Daraus folgt, dass die Stromversorgungsweichen der Zwischenregeneratoren, die für die Übertragung der hochfrequenten Nutzimpulse ausgelegt sind, eine grosse Dämpfung für niederfrequente Störimpulse aus dem Kabel aufweisen. Überspannungsimpulse mit flachen Flanken im Mikrosekundenbereich werden praktisch vollständig an den Stromversorgungsweichen reflektiert. Untersuchungen im Rahmen der Erfindung haben gezeigt, dass der Überspannungsfeinschutz in diesen Fällen keine Energie aufzunehmen braucht, solange die Amplitude der Überspannungsimpulse unterhalb der Ansprechspannung der Ableiter liegt.

Allerdings können Überspannungsableiter beim Ansprechen Spannungssprünge mit sehr steilen Flanken erzeugen. Damit die dabei eingekoppelten Störimpulse vom Überspannungsfeinschutz aufgenommen werden können, sind z.B. Strombegrenzungswiderstände mit relativ grossen Abmessungen und Schutzdioden mit relativ grosser Kristallfläche erforderlich. Dies bedingt eine grosse Eigeninduktivität der Widerstände und eine grosse Eigenkapazität der Dioden. Derartige Bauelemente beeinflussen jedoch die Übertragungseigenschaften des Überspannungsfeinschutzes für die Digitalsignale ungünstig, insbesondere auf der Sendeseite, da hier steile Impulse mit möglichst grosser Amplitude erzeugt werden müssen, was niedrige parasitäre Impedanzen der Bauelemente voraussetzt.

Aufgabe der Erfindung ist es daher, den Zwischenverstärker oder Zwischenregenerator der eingangs genannten Art derart auszubilden, dass die Störimpulse, die der zum Überspannungsgrobschutz vorgesehene Überspannungsableiter bei seinem Ansprechen hervorruft, auf ihrem Weg zum Eingang bzw. Ausgang, insbesondere hinsichtlich der Flankensteilheit stark verringert werden. Dies ist insbesondere dann mit Schwierigkeiten verbunden, wenn es sich bei dem Weg, auf den der Störimpuls zum Eingang bzw. Ausgang gelangt, um einen sehr breitbandigen Übertragungsweg handelt.

Zur Lösung dieser Aufgabe wird die Schaltungsanordnung derart ausgebildet, dass eine den Überspannungsableiter und eine Induktivität enthaltende Serienschaltung über einen ausserhalb des Fernspeisestrompfades gelegenen Tiefpass zwischen einem zwischen den Drosselanordnungen der Stromversorgungsweichen gelegenen Anschluss des Fernspeisestrompfades und der Kabelaussenleiterverbindung angeschlossen ist.

Dabei ergibt sich, dass weder am Eingang noch am Ausgang des Zwischenverstärkers oder Zwischenregenerators ein Überspannungsableiter unmittelbar mit dem Kabelinnenleiter verbunden ist. Durch die erfindungsgemässen Massnahmen ergibt sich der Vorteil, dass trotz der Steilheit des beim Ansprechen des Überspannungsableiters erzeugten Spannungssprungs weder in den Eingangskreis noch in den Ausgangskreis des Zwischenverstärkers oder Zwischenregenerators Störspannungen, deren Frequenz in das breite Nutzsignalübertragungsband fallen, mit einer Amplitude in den Signalübertragungsweg gelangen können, die für den Überspannungsfeinschutz und/oder für die aktiven Bauteile des Verstärkers eine Belastung darstellen könnten, die sich auf die Zuverlässigkeit nachteilig auswirkt.

In Weiterbildung der Erfindung enthält die Serienschaltung einen ohmschen Widerstand.

Zweckmässigerweise sind die Induktivität und der ohmsche Widerstand durch eine Drosselspule gebildet, die eine Wicklung aus Draht aus einem Material mit grossem spezifischen Widerstand, insbesondere Konstantan hat. Der Wert des ohmschen Widerstandes beträgt vorzugsweise wenigstens annähernd 0,5 Ohm.

Bei einer vorteilhaften Ausführungsform der Erfindung ist der Tiefpass derart angeordnet, dass er zugleich in einem zwischen Ausgang und Eingang des Zwischenverstärkers bzw. Zwischenregenerators vorhandenen Rückkopplungsweg angeordnet ist.

In weiterer Ausgestaltung der Erfindung wird die Schaltungsanordnung derart ausgebildet, dass der Tiefpass Bestandteil einer dem Eingang des Zwischenverstärkers bzw. Zwischenregenerators vor- bzw. dem Ausgang nachgeschalteten Frequenzweiche ist.

Durch diese Massnahmen ergibt sich der Vorteil, dass der Tiefpass in zweifacher Hinsicht ausgenutzt ist und somit keinen zusätzlichen. Aufwand bedeutet.

Weitere vorteilhafte Ausgestaltungen der Erfindung ergeben sich aus den Patentansprüchen 7 bis 10.

Die Erfindung wird anhand der in den Figuren dargestellten Ausführungsbeispiele näher erläutert. Es zeigen

Fig. 1 eine Schaltungsanordnung zum Überspannungsgrobschutz mit einem Tiefpass zur Verringerung von Ableiter-Störspannungen,

Fig. 2 eine Schaltungsanordnung mit Überspannungsgrobschutz und mit einem so angeordneten Tiefpass, dass sowohl Ableiter-Störspannungen als auch eine hochfrequente Rückkopplung vom Ausgang auf den Eingang verringert werden und

Fig. 3 den Aufbau eines Regenerators mit einer inneren Kammer und einer über eine äussere Kammer geführten Kabelaussenleiterverbindung.

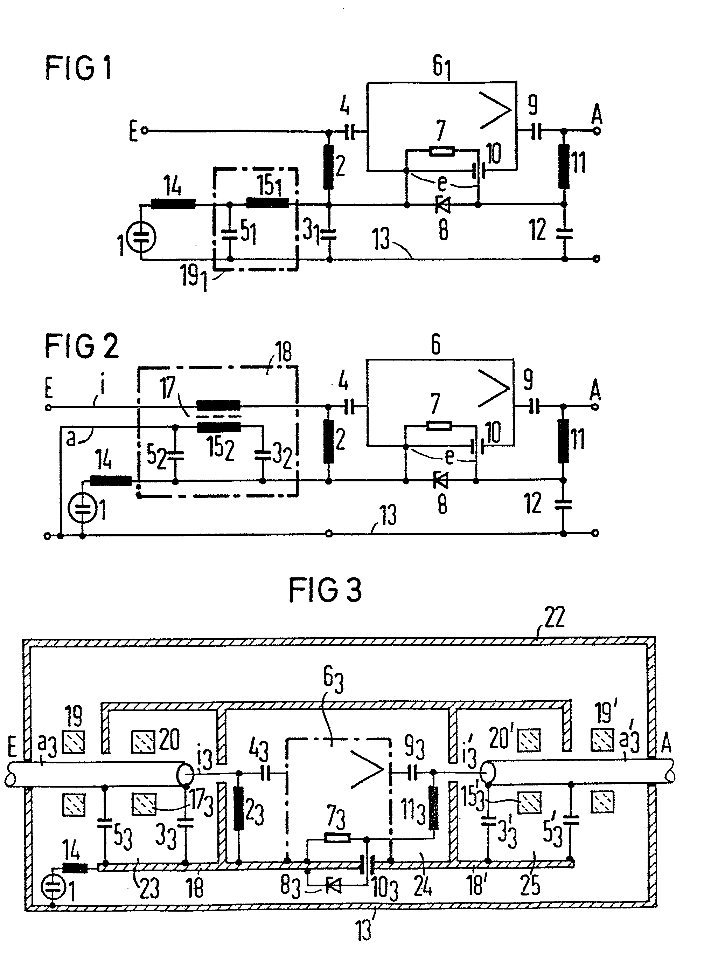

Fig. 1 zeigt eine Schaltungsanordnung zum Überspannungsgrobschutz für einen Zwischenverstärker bzw. Zwischenregenerator. Der Eingang E und der Ausgang A sind über Fernspeiseweichen galvanisch miteinander verbunden. Auf der Seite des Eingangs E ist ein gasgefüllter Überspannungsableiter 1 vorgesehen.

Der Zwischenverstärker enthält den aktiven Verstärkerteil 6, der über die beiden Fernspeiseweichen 2, 4 und 9, 11 über den Innenleiter des Kabels ferngespeist wird. Vom Eingang E des Zwischenverstärkers gelangt das Nutzsignal über den als Hochpass der eingangsseitigen Fernspeiseweiche 2, 4 dienenden Kondensator 4 an den aktiven Verstärkerteil.

Der Ausgang des aktiven Verstärkerteils 6 ist über den als Hochpass der ausgangsseitigen Fernspeiseweiche 9, 11 dienende Kondensator 9 an den Ausgang A des Zwischenverstärkers geführt. Bei Verwendung einer Stromsteuerung im aktiven Regeneratorteil kann der Kondensator 9 entfallen.

Der Zwischenverstärker ist für Gleichstromfernspeisung eingerichtet. Der Innenleiter des ankommenden Koaxialkabels ist über die Drossel 2, den Widerstand 7, die Drossel 11 an den Innenleiter des abgehenden Koaxialkabels geführt. Der Widerstand 7 stellt den Widerstand dar, der am Speiseeingang e des aktiven Verstärkerteiles 6 wirksam ist. Der Spannungsabfall, den der eingeprägte Fernspeisestrom am Widerstand 7 und damit am Speiseeingang e hervorruft, wird durch die parallel zum Speiseeingang e liegende Z-Diode 8 begrenzt.

Der eine Anschluss des Speiseeingangs e liegt auf dem Massepotential des aktiven Verstärker- bzw. Regeneratorteils 6 und ist über den als Abblockkondensator dienenden Kondensator $3_1$ an die Kabelaussenleiterverbindung 13 geführt, die die Aussenleiter des ankommenden und des abgehenden Koaxialkabels direkt miteinander verbindet. Der andere Anschluss des Speiseeingangs e ist über den Kondenstor 12 an die Kabelaussenleiterverbindung 13 geführt.

Der Fernspeisestrompfad verläuft vom Eingang E über die Drossel 2 zum Gehäuse bzw. Schirm des aktiven Verstärkerteils 6 und von dort über den Widerstand 7, durch den Durchführungskondensator 10 und über die Drossel 11 zum Ausgang A. Der Durchführungskondensator 10 schliesst den HF-Weg des Ausgangskreises.

Schaltet man den Ableiter parallel zum Kondensator $3_1$ so wirkt der Ableiter 1 für die Überspannungsimpulse mit flachen Flanken aus dem ankommenden Kabel wie zwischen Innen- und Aussenleiter des Koaxialkabels geschaltet, da die Spule 2 für niedrige Frequenzen eine niedrige Impedanz hat. Bei entsprechender Bemessung des Drahtquerschnitts der Spulenwicklung ist damit die Schutzwirkung des Ableiters 1 gewährleistet.

Die Anordnung des Ableiters hat im Prinzip den Vorteil, dass der Kondensator $3_1$ die Steilheit des beim Ansprechen des Ableiters 1 erzeugten Spannungssprungs und dementsprechend die Amplitude der in den Eingangskreis bzw. Ausgangskreis des Regenerators 6 eingekoppelten Störspannung verringert, da die hochfrequenten Anteile des Spannungssprungs durch den Kondensator $3_1$ bedämpft werden. In der Praxis wird die Dämpfungswirkung des Kondensators 3 für hohe Frequenzen durch unvermeidliche Zuleitungsinduktivitäten sowie die Eigeninduktivität der Kondensatorbeläge beeinträchtigt, welche aufgrund der erforderlichen Spannungsfestigkeit, insbesondere ca. 2 bis 3 kV, und der sich daraus ergebenden Abmessungen z.B. bei einem Wickelkondensator technisch nicht unter ein gewisses Mass verringert werden können.

Durch den Tiefpass $5_1$, $15_1$, der im gezeigten Beispiel durch die Drossel 14 zu einem T-Glied ergänzt wird, wird auf einfache Weise durch zusätzliche Dämpfungsmassnahmen zwischen dem Ableiter 1 und dem Weichenkondensator $3_1$ eine langsamere Entladung des Weichenkondensators $3_1$ bei gleichzeitiger Bedämpfung der vom Ableiter 1 erzeugten Störspannung erreicht. Beim Zünden des Ableiters 1 wird der bis zur Ableiter-Ansprechspannung aufgeladene Kondensator $3_1$ nicht kurzschlussartig über den Ableiter entladen. Da die Stromänderung beim Entladen des Weichenkondensators $3_1$ und des zusätzlichen Kondensators 5 über den Ableiter 1 durch die Induktivität der Spulen 14, 15 erheblich verlangsamt und die Steilheit der Spannungsänderung insbesondere am Weichenkondensator 3 verringert wird, verringern sich sowohl die Impulsbelastung insbesondere des Weichenkondensators $3_1$ als auch die in den Verstärker bzw. Regenerator eingekoppelte Störimpulsamplitude.

Die Brennspannung eines gasgefüllten Überspannungsableiters nimmt bekanntlich teilweise mit wachsender Stromstärke ab. Wie Untersuchungen im Rahmen der Erfindung gezeigt haben, kann die daraus resultierende teilweise fallende Strom-Spannungs-Kennlinie des Ableiters 1 während der Entladung des Weichenkondensators $3_1$ über den Tiefpass 14, 5, $15_1$ zu hochfrequenten Resonanzschwingungen mit ansteigender Amplitude führen, die über die Stromversorgungsweiche $3_1$, 2, 4 in den Regenerator gelangen. Derartige Störspannungen lassen sich auf einfache Weise bedämpfen, indem die Spule 14 mit einem entsprechenden Serienverlustwiderstand durch Verwendung einer Wicklung mit hohem spezifischen Widerstand z.B. Konstantan ausgeführt wird.

Die Drosselspule 14 hat insbesondere eine Induktivität $L = 300$ nH und einen Wicklungswiderstand $R_s = 0,5\ \Omega$. Die Spule 15 lässt sich vorteilhaft mit Hilfe von einem oder mehreren Ferrit-Ringkernen realisieren, die über die Verbindungsleitung zwischen Kondensatoren $5_1$ und $3_1$ geschoben werden.

Der Zwischenverstärker bzw. Zwischenregenerator nach Fig. 2 stimmt mit dem nach Fig. 1 weitgehend überein. Abweichend ist bei dem in Fig. 2 gezeigten Zwischenverstärker der Kondensator $3_1$, der die Drosselanordnung 2 mit der Kabelaussenleiterverbindung verbindet, durch den Kondensator $3_2$ ersetzt, der zusammen mit der in Serie angeordneten Wicklung $15_2$ der Leitungsdrossel 17 zwischen dem Massepotential des Verstärkers 6 und der Kabelaussenleiterverbindung 13 liegt. Die andere Wicklung der Längsdrossel 17 liegt im Zuge des Innenleiters $i_2$. Der dem Koaxialkabel der Strecke zugewandte Anschluss der Wicklung $15_2$ ist über den Kondensator $5_2$ des Tiefpasses an das Massepotential des Verstärkers 6 geführt.

In der Praxis wird die Leitungsdrossel vorzugsweise durch einen auf die Koaxialleitung aufgesetzten Ferritkern realisiert. Die Serienschaltung aus Überspannungsableiter 1 und Drosselspule 14 liegt unmittelbar zwischen dem Massepotential des Verstärkers 6 und der Kabelaussenleiterverbindung 13.

Wie aus Fig. 2 hervorgeht, ergibt sich ein Regeneratoraufbau mit vergleichsweise geringem schaltungsmässigen Aufwand dadurch, dass der Tiefpass 14, $5_2$, $15_2$ im Eingangskreis des Regenerators so angeordnet wird, dass er sowohl Störspannungen, die der Ableiter 1 verursacht, reduziert als auch eine hochfrequente Rückkopplung vom Ausgang A auf den Eingang E des Regenerators verringert.

Eine derartige Eingangsschaltung führt insbesondere bei Regeneratoren zur Übertragung von hochfrequenten Digitalsignalen zu einem besonders geringen Gesamtaufwand, da in diesem Fall einerseits hohe Anforderungen an die Rückwärtsdämpfung vom Ausgang A auf den Eingang E des Regenerators bestehen, andererseits die Zuleitungs- und Eigeninduktivität der Weichenkondensatoren $3_2$ und 12 bezüglich der erreichbaren Umlaufdämpfung eine technische Grenze setzen. Unter Umlaufdämpfung ist in diesem Zusammenhang die Dämpfung zwischen dem Ausgang A des Zwischenverstärkers oder Zwischenregenerators und dem Eingang E zu verstehen.

Ein Regenerator bzw. Verstärker, bei dem ausgehend von Fig. 2 anstelle der Leitungsdrossel 17 ein Stück Koaxialleitung mit aufgesetztem Ferritkern vorgesehen ist, geht aus Fig. 3 hervor.

Der Zwischenregenerator nach Fig. 3 weicht von dem nach Fig. 2 auch insofern ab, als auf beiden Seiten des aktiven Teils $6_3$ Frequenzweichen mit Tiefpass vorgesehen sind. Einander entsprechende Bauelemente sind mit Bezugszeichen versehen, die sich nur durch einen Apostroph unterscheiden.

Um das Nutzsignal gegenüber Störspannungen abzuschirmen, ist zwischen der Eingangsklemme E und dem Hochpass 4 eine koaxiale Leitung 17 vorgesehen, deren Aussenleiter a kabelseitig mit dem Kabelaussenleiterpotential 13 und regeneratorseitig mit den Kondensatoren $5_3$ und $3_3$ verbunden ist.

Die Spule $15_2$ ist in die auf Kabelaussenleiterpotential 13 liegende Verbindung der Kondensatoren $3_2$ und $5_2$ anstatt wie nach Fig. 1 in die auf Regeneratorpotential liegende Verbindung eingefügt und wird durch Ferritringkerne realisiert, die über die eingangsseitige Koaxialleitung 17 aufgeschoben sind. Die Spule $15_2$ bildet mit der Koaxialleitung 17 als Wicklung eine Leitungsdrossel, die bekanntlich das zwischen Innenleiter $i_3$ und Aussenleiter $a_3$ ankommende Nutzsignal nicht beeinflusst, da sich das Magnetfeld der im Innen- und Aussenleiter entgegengesetzt fliessenden Signalströme aufhebt. Beim Zündvorgang des Ableiters 1 fliesst dagegen ein Störstrom nur über den Aussenleiter $a_3$, so dass die Induktivität der Leitungsdrossel $15_2$ wirksam wird und den Störstrom durch den Kondensator $3_2$ bedämpft. Der Tiefpass 14, $5_2$, $15_2$ hat also die Wirkung des Tiefpasses 14, $5_1$, $15_1$ nach Fig. 1.

Der zum Regeneratorausgang A fliessende Nutz-Signalstrom ruft am ausgangsseitigen Weichenkondensator 12 nach Fig. 2 einen Spannungsabfall hervor, der über die Kabelaussenleiterverbindung 13 und den Aussenleiter $a_3$ der eingangsseitigen Koaxialleitung einen Störstrom in den eingangsseitigen Weichenkondensator $3_3$ treibt. Da dieser Störstrom nur über den Aussenleiter $a_3$ der Koaxialleitung $a_3$, $i_3$ fliesst, ist die Induktivität der Leitungsdrossel $17_3$ wirksam und bedämpft den Störstrom.

Die Anordnung der Spule $15_2$ nach Fig. 2 mit den Kondensatoren $5_3$ und $3_3$ bildet ein sogenanntes Potentialtrennfilter. Dieses dämpft in der angegebenen Weise sowohl die vom Regenerator-Ausgangssignal abhängigen Störströme als auch zusammen mit der Spule 14 die vom Ableiter 1 erzeugten Störströme im Eingangskreis des Regenerators.

Bei hohen Anforderungen an die Grösse der Dämpfungen kann das Potentialtrennfilter entsprechend Fig. 3 mit einem auf Regeneratorbezugspotential liegenden Schirm 18 versehen werden, der zweckmässigerweise auf dem Potential des aktiven Regeneratorteils $6_3$ liegt. Das ausgangsseitige Potentialtrennfilter kann gegebenenfalls durch einen Weichenkondensator ersetzt werden.

Bis zu einer oberen Frequenzgrenze von etwa 100 MHz lassen sich die Anordnungen nach Fig. 2 bzw. Fig. 3 mit diskreten Bauelementen, insbesondere diskreten Kondensatoren 3 und 5 aufbauen. Für eine obere Grenzfrequenz von etwa 1 GHz eignet sich insbesondere eine Anordnung, wie sie aus der genannten DE-OS 3 122 084 hervorgeht. In diesem Fall ist die Schaltanordnung insbesondere derart ausgebildet, dass der Aussenleiter einer homogenen Leitung wenigstens kapazitiv mit dem Innenleiter einer inhomogenen Leitung verbunden ist und der einem Anschlusskabel benachbarte Anschluss des Aussenleiters der inhomogenen Leitung mit einer Abschirmung in leitender Verbindung steht und der andere Anschluss des Aussenleiters mit dem Bezugspotential des aktiven Verstärker- bzw. Regeneratorteiles verbunden ist und dass die Serienschaltung aus Überspannungsableiter und Induktivität zwischen der Abschirmung und der Kabelaussenleiterverbindung angeordnet ist.

Bei den in den Figuren gezeigten Schaltungsanordnungen ist der aktive Verstärkerteil bzw. Regeneratorteil 6 auf Seiten des am Eingang E und des am Ausgang A jeweils mit einer eigenen Einrichtung zum Überspannungsfeinschutz versehen. Dieser Überspannungsfeinschutz kann in bekannter Weise, z.B. mit Hilfe von Z-Dioden realisiert werden und ist daher in den Figuren nicht dargestellt.

Zum Schutz der Z-Diode 8 gegen Überlastung kann man zweckmässigerweise der Z-Diode einen Widerstand vorschalten und über die Serienschaltung aus Z-Diode und Widerstand einen Überspannungsableiter mit geringer Ansprechspannung, z.B. 90 V legen. Der Widerstand liegt dabei zwischen dem Speiseeingang e und einer der beiden Fernspeiseweichen (DE-AS 1 462 247).

Die Schaltungsanordnung zum Überspannungsschutz eignet sich besonders für Zwischenregeneratoren, die digitale Signale mit vergleichsweise hoher Bitfolgefrequenz, insbesondere einige Hundert Mbit/s über ein Koaxialkabel übertragen.

Ein ebenfalls geeigneter Anschlusspunkt für einen Stromzweig mit Überspannungsableiter, der anstelle von oder zusätzlich zu dem Ableiter 1 vorgesehen werden kann, ist z.B. in Fig. 3 der Verbindungspunkt der Drossel $11_3$ mit der Z-Diode $8_3$. Der Durchführungskondensator $10_3$ ist dabei auch im Hinblick auf den Störimpuls zu bemessen.

**Patentansprüche**

1. Schaltungsanordnung zum Überspannungsgrobschutz für einen Zwischenverstärker oder Zwischenregenerator einer Nachrichten-Übertragungseinrichtung mit Koaxialkabelstrekke, der am Eingang (E) und am Ausgang (A) mit je einer Stromversorgungsweiche (4, 2; 9, 11) und am Eingang (E) und/oder am Ausgang (A) mit einer einen Überspannungsableiter (1) enthaltenden Vorrichtung zum Überspannungsgrobschutz bei Überspannungsbeeinflussung auf der kabelstrecke versehen ist, wobei die Stromversorgungsweichen (4, 2; 9, 11), die zur Fernspeisung über eine über den Innenleiter des Koaxialkabels geführten Fernspeisestrompfad vorgesehen sind, jeweils eine Drosselanordnung (2, 11) enthalten und wobei der Fernspeisestrompfad über die Drosselanordnungen (2, 11) der Stromversorgungsweiche und den dazwischen gelegenen Speiseeingang (e) des Zwischenverstärkers oder Zwischenregenerators (6) verläuft und wobei der Aussenleiter des ankommenden Kabels und der Aussenleiter des abgehenden Kabels über eine Kabelaussenleiterverbindung (13) miteinander verbunden sind, dadurch gekennzeichnet, dass eine den Überspannungsableiter (1) und eine Induktivität (14) enthaltende Serienschaltung über einen ausserhalb des Fernspeisestrompfades gelegenen Tiefpass ($5_1$, $15_1$) zwischen einem zwischen den Drosselanordnungen (2, 11) der Stromversorgungsweichen gelegenen Anschluss des Fernspeisestrompfades und der Kabelaussenleiterverbindung (13) angeschlossen ist.

2. Schaltungsanordnung nach Anspruch 1, dadurch gekennzeichnet, dass die Serienschaltung einen ohmschen Widerstand enthält.

3. Schaltungsanordnung nach Anspruch 2, dadurch gekennzeichnet, dass die Induktivität und der ohmsche Widerstand durch eine Drosselspule (14) gebildet sind, die eine Wicklung aus Konstantandraht hat.

4. Schaltungsanordnung nach Anspruch 2, dadurch gekennzeichnet, dass der Wert des ohmschen Widerstandes wenigstens annähernd 0,5 Ohm beträgt.

5. Schaltungsanordnung nach einem der Ansprüche 1 bis 4, dadurch gekennzeichnet, dass der Tiefpass ($5_2$, $15_2$) derart angeordnet ist, dass er in einem zwischen Ausgang (A) und Eingang (E) des Zwischenverstärkers bzw. Zwischenregenerators vorhandenen Rückkopplungsweg angeordnet ist.

6. Schaltungsanordnung nach Anspruch 5, dadurch gekennzeichnet, dass der Tiefpass ($5_2$, $15_2$) Bestandteil einer dem Eingang (E) des Zwischenverstärkers bzw. Zwischenregenerators (6) vor- bzw. dem Ausgang nachgeschalteten Frequenzweiche ist.

7. Schaltungsanordnung nach Anspruch 6, dadurch gekennzeichnet, dass der Tiefpass ($5_2$, $15_2$) der Frequenzweiche wenigstens einen Längszweig mit einer Wicklung ($15_2$) einer Leitungsdrossel (17) enthält, die an der dem Koaxialkabel der Übertragungsstrecke zugewandten Seite unmittelbar oder über wenigstens eine weitere Leitungsdrossel-Wicklung an die Kabelaussenleiterverbindung (13) und über einen Kondensator ($5_2$) an die Verbindung der zugeordneten Drosselanordnung (2) mit dem Speiseeingang (e) geführt ist und dass der den Überspannungsableiter (1) enthaltende Stromzweig zwischen der Verbindung der Drosselanordnung (2) mit dem Speiseeingang (e) einerseits und der Kabelaussenleiterverbindung (13) andererseits liegt.

8. Schaltungsanordnung nach Anspruch 7, dadurch gekennzeichnet, dass der Tiefpass ($5_3$, $15_3$) der Frequenzweiche eine im Nutzsignalübertragungsweg liegende Koaxialleitung ($a_3$, $i_3$) enthält, und dass die Koaxialleitung ($a_3$, $i_3$) wenigstens einen Magnetkern (20) trägt und mit ihrem Aussenleiter (a) über wenigstens eine Kapazität ($5_3$) mit einem im Innern eines auf dem Potential des Kabelaussenleiters liegenden Aussengehäuses (22) angeordneten Innengehäuse (23, 24, 25) verbunden ist und dass die den Überspannungsableiter (1) enthaltende Serienschaltung zwischen dem Innengehäuse (23, 24, 25) und dem Aussengehäuse (22) angeordnet ist.

9. Schaltungsanordnung nach Anspruch 8, dadurch gekennzeichnet, dass die Koaxialleitung (a, i) im Bereich zwischen dem Tiefpass ($15_3$, $5_3$) und dem Koaxialkabel wenigstens einen weiteren Magnetkern (19) trägt.

10. Schaltungsanordnung nach einem der Ansprüche 1 bis 6, dadurch gekennzeichnet, dass der Aussenleiter einer homogenen Leitung wenigstens kapazitiv mit dem Innenleiter einer inhomogenen Leitung verbunden ist und der einem Anschlusskabel benachbarte Anschluss des Aussenleiters der inhomogenen Leitung mit einer Abschirmung in leitender Verbindung steht und der andere Anschluss des Aussenleiters mit dem Bezugspotential des aktiven Verstärker- bzw. Regeneratorteiles verbunden ist und dass die Serienschaltung aus Überspannungsableiter (1) und Induktivität (14) zwischen der Abschirmung und der Kabelaussenleiterverbindung angeordnet ist.

**Claims**

1. A circuit arrangement for surge voltage coarse protection for an intermediate amplifier or intermediate regenerator of a communications transmission device with a coaxial cable link, which is provided at both its input (E) and its output (A) with a current supply separating filter (4, 2; 9, 11), and is provided at its input (E) and/or at its output (A) with a device which contains a surge voltage arrester (1), and which provides a surge voltage coarse protection in the event of the influence of surge voltage on the cable link, where the current supply separating filters (4, 2; 9, 11) are provided for remote supply via a remote supply current path which extends across the inner conductor of the coaxial cable, and each contains a choke arrangement (2, 11), and where the remote supply current path extends across the choke arrangements (2, 11) of the current supply separating filters and the intervening supply input (e) of the intermediate amplifier or intermediate regenerator (6), and where the outer conductor of the incoming cable and the outer conductor of the outgoing cable are connected to one another via a cable outer conductor connection (13), characterised in that a series circuit which contains the surge voltage arrester (1) and a inductance (14) is connected via a low-pass filter ($5_1$, $15_1$), located outside of the remote supply current path, between a terminal of the remote supply current path positioned between the choke arrangements (2, 11) of the current supply separating filters and the cable outer conductor connection (13).

2. A circuit arrangement as claimed in Claim 1, characterised in that the series circuit contains a resistor.

3. A circuit arrangement as claimed in Claim 2, characterised in that the inductance and the resistor are formed by a choke coil (14) which comprises a winding made of constantan wire.

4. A circuit arrangement as claimed in Claim 2, characterised in that the value of the resistor is at least approximately 0.5 Ohms.

5. A circuit arrangement as claimed in one of Claims 1 to 4, characterised in that the low-pass filter $(5_2, 15_2)$ is arranged in such manner that it is located in a feedback path between the output (A) and the input (E) of the intermediate amplifier or intermediate regenerator.

6. A circuit arrangement as claimed in Claim 5, characterised in that the low-pass filter $(5_2, 15_2)$ is part of a frequency separating filter which is connected prior to the input (E) of the intermediate amplifier or intermediate regenerator (6), or following the output.

7. A circuit arrangement as claimed in Claim 5, characterised in that the low-pass filter $(5_2, 15_2)$ of the frequency separating filter contains at least one series arm comprising a winding $(15_2)$ of a line choke (17) which, on the end adjacent the coaxial cable of the transmission link, leads either directly, or via at least one further line choke winding, to the cable outer conductor connection (13), and leads via a capacitor $(5_2)$ to the connection of the assigned choke arrangement (2) with the supply input (e), and that the current arm, which contains the surge voltage arrester (1) is located between the connection of the choke arrangement (2) to the supply input (e) on the one hand, and the cable outer conductor connection (13) on the other hand.

8. A circuit arrangement as claimed in Claim 7, characterised in that the low-pass filter $(5_3, 15_3)$ of the frequency separating filter contains a coaxial line $(a_3, i_3)$ which is located in the useful signal transmission path, and that the coaxial line $(a_3, i_3)$ bears at least one magnetic core (20), and its outer conductor (a) is connected via at least one capacitor $(5_3)$ to an inner housing (23, 24, 25) which is arranged inside an outer housing (22) which carries the potential of the cable outer conductor, and that the series circuit which contains the surge voltage arrester (1) is arranged between the inner housing (23, 24, 25) and the outer housing (22).

9. A circuit arrangement as claimed in Claim 8, characterised in that the coaxial line (a, i) bears at least one further magnetic core (19) in the region between the low-pass filter $(15_3, 5_3)$ and the coaxial cable.

10. A circuit arrangement as claimed in one of Claims 1 to 6, characterised in that the outer conductor of a homogeneous line is connected at least capacitively to the inner conductor of an inhomogeneous line, and that terminal of the outer conductor of the inhomogeneous line which is adjacent to a connection cable is conductively connected to a screen, whereas the other terminal of the outer conductor is connected to the reference potential of the active amplifier or regenerator component, and that the series circuit consisting of the surge voltage arrester (1) and the inductance (14) is arranged between the screen and the cable outer conductor connection.

## Revendications

1. Montage de protection grossière contre des surtensions pour un répéteur intermédiaire ou pour un régénérateur intermédiaire d'un dispositif de transmission d'informations à voie de transmission à câble coaxial, pourvu respectivement à l'entrée (E) et à la sortie (A) d'un aiguillage d'alimentation en courant (4, 2; 9, 11), et à l'entrée (E) et/ou à la sortie (A) d'un dispositif parasurtension pour la protection grossière d'une surtension dans le cas d'une influence de surtension sur la voie câblée, du type dans lequel lesdits aiguillages d'alimentation en courant (4, 2; 9, 11) qui sont prévus pour la télétransmission par l'intermédiaire d'une voie de passage du courant de téléalimentation passant par le conducteur intérieur du câble coaxial, comportent chacun un dispositif à bobine d'arrêt (2, 11), et du type dans lequel la voie de passage du courant de téléalimentation passe par les dispositifs à bobine d'arrêt (2, 11) des aiguillages d'alimentation en courant et par l'entrée d'alimentation (e) de l'amplificateur intermédiaire ou du régénérateur intermédiaire (6) et située entre ceux-là, alors que le conducteur extérieur du câble d'entrée et le conducteur extérieur du câble de sortie sont reliés entre eux par l'intermédiaire d'une liaison (13) entre conducteurs extérieurs des câbles, caractérisé par le fait que le circuit série comportant le dispositif parasurtension (1) et une inductance (14), est relié, par l'intermédiaire d'un filtre passe-bas $(5_1, 15_1)$ situé en-dehors de la voie de passage du courant de téléalimentation, entre une borne de la voie de passage du courant de téléalimentation, située entre les dispositifs à bobine d'arrêt (2, 11) des aiguillages d'alimentation en courant et la liaison (13) entre les conducteurs extérieurs des câbles.

2. Montage selon la revendication 1, caractérisé par le fait que le circuit série comporte une résistance ohmique.

3. Montage selon la revendication 2, caractérisé par le fait que l'inductance et la résistance ohmique sont formées par une bobine d'arrêt (14) qui possède un enroulement fait avec du fil en constantan.

4. Montage selon la revendication 2, caractérisé par le fait que la valeur de la résistance ohmique est au moins égale à à peu près 0,5 Ohm.

5. Montage selon l'une des revendications 1 à 4, caractérisé par le fait que le filtre passe-bas $(5_2, 15_2)$ est disposé de telle façon qu'il est situé dans un circuit de contre-réaction prévu entre la sortie (A) et l'entrée (E) de l'amplificateur intermédiaire ou du régénérateur intermédiaire.

6. Montage selon la revendication 5, caractérisé par le fait que le filtre passe-bas ($5_2$, $15_2$) est un élément constitutif d'un filtre d'aiguillage monté en amont de l'entrée (E) de l'amplificateur intermédiaire ou du régénérateur intermédiaire (6) ou en aval de la sortie.

7. Montage selon la revendication 6, caractérisé par le fait que le filtre passe-bas ($5_2$, $15_2$) du filtre d'aiguillage comporte au moins une branche longitudinale avec un enroulement ($15_2$) d'une bobine d'arrêt de ligne (17) qui est reliée, du côté voisin de la voie de transmission du câble coaxial, directement ou par l'intermédiaire d'au moins un second enroulement de bobine de choc de ligne, à la liaison (13) des conducteurs extérieurs du câble et, par l'intermédiaire d'un condensateur ($5_2$) à la liaison du dispositif à bobine de choc (2) avec l'entrée d'alimentation (e) et que la branche de passage du courant, qui comporte le dispositif parasurtension (11) se situe entre la liaison du dispositif à bobine d'arrêt (2) avec l'entrée d'alimentation (e) d'une part et la liaison (13) des conducteurs extérieurs du câble, d'autre part.

8. Montage selon la revendication 7, caractérisé par le fait que le filtre passe-bas ($5_3$, $15_3$) du filtre d'aiguillage comporte un conducteur coaxial ($a_3$, $i_3$) qui se situe dans la voie de transmission des signaux utiles, et que le conducteur coaxial ($a_3$, $i_3$) porte au moins un noyau magnétique (20) et est relié par son conducteur extérieur (a) et par l'intermédiaire d'au moins une capacité ($5_3$), avec un boîtier intérieur (23, 24, 25) disposé à l'intérieur d'un boîtier extérieur (22) qui est porté au potentiel du conducteur extérieur du câble, et que le circuit série qui comporte le dispositif parasurtension (1), est disposé entre le boîtier intérieur (23, 24, 25) et le boîtier extérieur (22).

9. Montage selon la revendication 8, caractérisé par le fait que la ligne coaxiale (a, i) porte, dans la zone située entre le filtre passe-bas ($15_3$, $5_3$) et le câble coaxial, au moins un second noyau magnétique (19).

10. Montage selon l'une des revendications 1 à 6, caractérisé par le fait que le conducteur extérieur d'une ligne homogène est relié au moins capacitivement avec le conducteur intérieur d'une ligne hétérogène et la borne de liaison du conducteur extérieur, qui est voisine d'un câble de branchement de la ligne hétérogène est en liaison conductrice avec une écran, et l'autre borne du conducteur extérieur est reliée au potentiel de référence de l'élément amplificateur ou régénérateur actif, et que le circuit série, constitué par le dispositif parasurtension (1) et l'inductance (14), est disposé entre l'écran et la liaison entre les conducteurs extérieurs du câble.

FIG 1

FIG 2

FIG 3